# EUROPEAN PATENT SPECIFICATION

(11) **EP 2 131 984 B1**
(45) Date of publication and mention of the grant of the patent: **24.02.2021**
(21) Application number: 08724272.3
(22) Date of filing: 25.03.2008
(51) Int. Cl.: B23C 5/22, B23B 27/16, B23B 51/00, B23D 77/00

(54) **INDEXABLE CUTTING INSERT AND METHOD OF MACHINING**
INDIZIERBAR SCHNEIDEINSATZ UND BEARBEITUNGSVERFAHREN
INSERT DE COUPE INDEXABLE ET PROCÉDÉ D'USINAGE

(30) Priority: 30.03.2007 SE 0700859; 30.03.2007 SE 0700860
(43) Date of publication of application: 16.12.2009
(73) Proprietor: Seco Tools AB, 737 82 Fagersta (SE)
(72) Inventor: DURAND, Alain, F-38730 Doissin (FR)
(74) Representative: Sandvik
(86) International application number: PCT/SE2008/050325
(87) International publication number: WO 2008/121056

(56) References cited:
- EP-A1- 0 850 715
- EP-A1- 0 953 396
- EP-A1- 2 283 957
- WO-A1-03/097281
- WO-A1-2007/003248
- DE-A1- 10 009 721
- DE-U1- 20 306 151
- JP-A- 2013 000 842
- US-A- 17 453
- US-A- 720 441
- US-A- 909 401
- US-A- 1 365 683
- US-A- 2 995 963
- US-A1- 2007 071 561

## Description

The present invention relates to an indexable cutting insert according to claim 1 and to a method of machining according to claim 15. The closest available prior art for such insert and method is document US0909401 A1.

Cutting tools used for operations such as metal machining in operations such as milling, drilling, boring, and turning are often provided with replaceable cutting inserts having cutting edges that are used instead of a cutting edge formed integrally with a main body of the tool. It is known to provide indexable cutting inserts that can be turned to a plurality of different positions to expose one or more cutting edge to the workpiece in each position. In this way, it is not necessary to, for example, purchase a new cutting insert each time a cutting edge gets worn. US909401A discloses a reamer having indexable cutters.

It is desirable to provide a cutting insert that is indexable to a plurality of positions.

According to an aspect of the present invention, an indexable cutting insert comprises a body having a first surface, a second surface, and an intermediate surface. The intermediate surface comprises a generally cylindrical main surface and a plurality of recess surfaces extending radially inwardly from the main surface, the main surface and each recess surface extending between the first surface and the second surface. A cutting edge is defined by an intersection between the main surface and each recess surface. All cutting edges are identical. Furthermore, the cutting insert comprises a hole for a clamping screw.

According to another aspect of the present invention, a method of machining is provided. The method includes mounting an indexable cutting insert on a tool holder, the cutting insert comprising a body having a first surface, a second surface, and an intermediate surface, the intermediate surface comprising a generally cylindrical main surface, a hole for a clamping screw, and a plurality of recess surfaces, each recess surface extending radially inwardly from the main surface, the main surface and each recess surface extending between the first surface and the second surface, cutting edges being defined by an intersection between the main surface and each recess surface, wherein all cutting edges are identical, such that one cutting edge formed by the intersection of one of the recess surfaces and the main surface extends beyond a periphery of the tool holder and forms a working cutting edge. Cutting operations are performed with the working cutting edge. The mounting of the cutting insert is changed so that another cutting edge formed by the intersection of one of the recess surfaces and the main surface extends beyond the periphery of the tool holder and forms the working cutting edge.

### BRIEF DESCRIPTION OF THE DRAWINGS

The features and advantages of the present invention are well understood by reading the following detailed description in conjunction with the drawings in which like numerals indicate similar elements and in which:
FIG. 1A is a perspective view of a cutting insert according to an embodiment of the present invention, and FIGS. 1B-1D are plan views of three different sides of the cutting insert of FIG. 1A; and
FIG. 2 is a partially exploded, perspective view of a cutting tool using a cutting insert according to an embodiment of the present invention.

### DETAILED DESCRIPTION

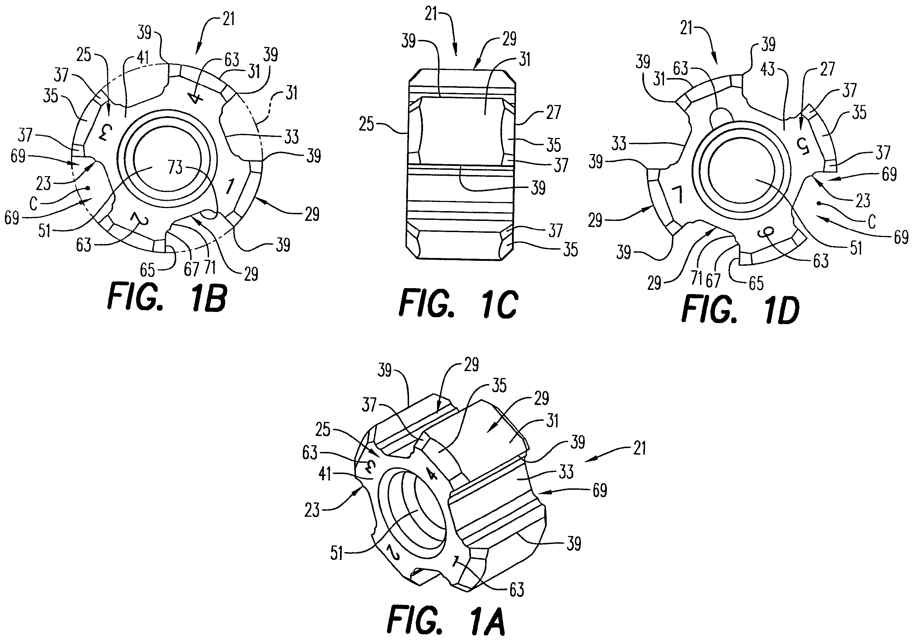

A cutting insert 21 according to an embodiment of the present invention is shown in FIGS. 1A-1D. The cutting insert 21 comprising a body 23 having a first surface 25, a second surface 27, and an intermediate surface 29. The intermediate surface 29 comprises a generally cylindrical main surface 31 and at least one recess surface 33 extending radially inwardly from the main surface. The intermediate surface 29 can be circularly cylindrical as shown in FIGS. 1A-1D, however, it may have other generally cylindrical shapes. In the embodiment of FIGS. 1A-1D, a plurality of recess surfaces 33 divide the main surface 31 into a plurality of segments. The cutting insert 21 may be made out of any material commonly used to make cutting inserts, such as cemented carbide.

The main surface 31 and the recess surface 33 extend between but not necessarily to the first surface 25 and the second surface 27. As seen in FIG. 1A and 1C, the recess surfaces 33 extend from the first surface 25 to the second surface 27, while a chamfer surface 35 is disposed between the main surface 31 and each of the first surface and the second surface. A further chamfer 37 is disposed between the chamfer surfaces 35 and the recess surfaces 33.

A cutting edge 39 is defined by an intersection between the main surface 31 and the recess surface 33. In the embodiment illustrated in FIG. 1A-1D, there are four recess surfaces 33 and, consequently, eight intersections between the recess surfaces and the main surface 31. In this embodiment, each of the eight intersections defines a cutting edge 39.

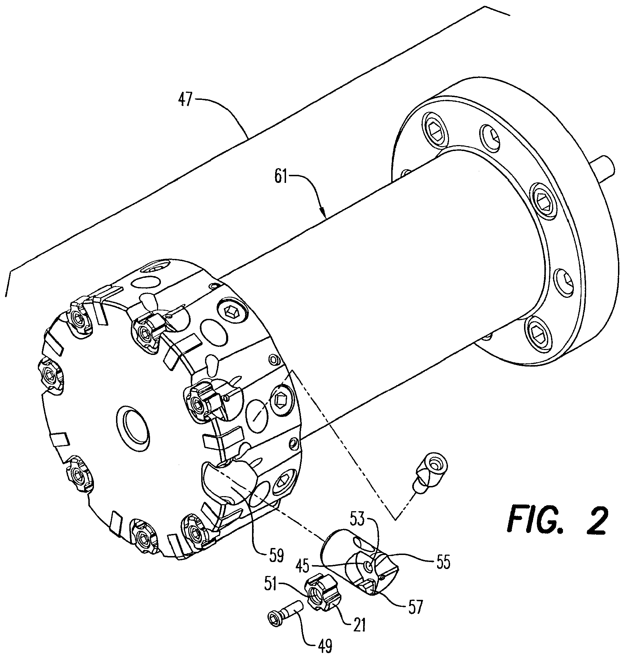

The first surface 25 and the second surface 27 can each comprise a generally planar supporting surface 41 and 43, respectively, for supporting the insert relative to a bottom abutment surface 45 on a tool holder 47 such as is seen in FIG. 2. Usually, the insert 21 will be clamped to the abutment surface 45 by a clamping screw 49 that extends through a hole 51 in the insert and into an internally threaded hole 53 on the tool holder 47. A tool holder comprising a removable cassette 55 is particularly well-suited for use in connection with the insert of the present invention and is described in more detail in commonly assigned SE Application No. 0700859-2 which is incorporated by reference. The internally threaded hole 53 can be provided on the cassette 55. While planar supporting and abutment surfaces are described in the present application for purposes of discussion, it will be appreciated that the supporting and abutment surfaces need not be flat and/or planar, and may be curved, grooved, or otherwise shaped as may be appropriate.

The tool holder 47 can also be provided with one or more side abutment surfaces 57 for abutting surfaces on the insert 21 to prevent the insert from rotating about the clamping screw 49. For the insert 21 in the embodiment of FIG. 1A-1D, side abutment surfaces 57 are provided on the removable cassette 55 shown in FIG. 2 and abut one of the recess surfaces 33 that, in the particular indexed position of the insert 21, does not define a working cutting edge 39. It is also known to form side abutment surfaces in recesses 59 of a tool holder body 61 to which the insert 21 is mounted, with or without a cassette 55.

An identifying indicia 63 such as a number or a letter can be provided to correspond to each cutting edge 39 on the insert 21. The indicia 63 will ordinarily be provided on the first and second surfaces 25 and 27.

When the insert 21 is mounted on a tool holder 47 as shown in FIG. 2, the main surface 31 defines a relief or clearance surface, i.e., defined here as the surface that follows the cutting edge 39 in a direction of movement of the insert relative to a workpiece. In the insert 21, the recess surface 33 defines a rake surface. As seen, for example, in FIGS. 1B and 1D, a first portion 65 of the recess surface 33 generally adjacent to the main surface 31 extends radially inwardly from the main surface along a plane intersecting a central axis of the cutting insert. A second portion 67 of the recess surface 33 disposed radially inward from the first portion 65 deviates from the plane inwardly generally toward a center C of a recess 69 defined by the recess surface. A third portion 71 of the recess surface 33 disposed radially inwardly from the second portion 67 extends generally away from the center C of the recess 69. A fourth portion 73 of the recess surface 33 disposed radially inwardly from the third portion 71 is substantially planar. A radiused surface can be provided between the fourth portion 73 and the third portion 71 and can assist in locating the cutting insert 21 relative to a side abutment surface 57 when mounting the cutting insert on a toolholder 47. While other shapes for the recess surface 33 than that defined by the first, second, third, and fourth portions 65, 67, 71, and 73 can be provided, the illustrated shape can facilitate chip formation and breakage.

In a method of machining according to an aspect of the present invention, a cutting insert 21 is mounted on a tool holder 47. The cutting insert 21 is mounted on the tool holder 47 such that one cutting edge 39 formed by the intersection of the recess 33 and the main surface 31 extends beyond a periphery of the tool holder and forms a working cutting edge. Cutting operations can be performed with the working cutting edge 39 and the mounting of the cutting insert 21 can thereafter be changed, usually after the cutting edge 39 is worn to a particular point or has been in service for a particular length of time, so that another cutting edge extends beyond the periphery of the tool holder and forms the working cutting edge.

In the present application, the use of terms such as "including" is open-ended and is intended to have the same meaning as terms such as "comprising" and not preclude the presence of other structure, material, or acts.

## Claims

1. An indexable cutting insert (21), comprising a body (23) having a first surface (25), a second surface (27), and an intermediate surface (29), the intermediate surface comprising a generally cylindrical main surface (31) and a plurality of recess surfaces (33), each recess surface extending radially inwardly from the main surface, the main surface (31) and each recess surface (33) extending between the first surface (25) and the second surface (27), the main surface (31) and each recess surface (33) intersecting along at least two edges, a cutting edge (39) being defined by each intersection between the main surface (31) and each recess surface (33), wherein the main surface (31) defines a relief surface, **characterized in that** the cutting insertcomprises a hole (51) for a clamping screw, wherein
a first portion (65) of each recess surface (33) generally adjacent to the main surface (31) extends radially inwardly from the main surface along a plane intersecting a central axis of the cutting insert (21), and a second portion (67) of each recess surface (33) disposed radially inward from the first portion (65) deviates from the plane inwardly generally toward a center (C) of a recess (69) defined by each recess surface (33),
a third portion (71) of each recess surface (33) disposed radially inwardly from the second portion (67) extends generally away from the center (C) of the recess (69), and wherein
a fourth portion (73) of each recess surface (33) disposed radially inwardly from the third portion (71) is planar.

2. The cutting insert (21) as set forth in claim I, wherein each recess surface (33) extends from the first surface (25) to the second surface (27).

3. The cutting insert (21) as set forth in claim I, comprising a chamfer surface (35) between the main surface (31) and each of the first surface (25) and the second surface (27).

4. The cutting insert (21) as set forth in claim 3, comprising a further chamfer (37) between the chamfer surface (35) and the recess surface (33).

5. The cutting insert (21) as set forth in claim I, wherein the first surface (25) and the second surface (27) each comprise a generally planar supporting surface (41 and 43).

6. The cutting insert (21) as set forth in claim I, comprising four recess surfaces (33) forming eight cutting edges (39) with the main surface (31).

7. The cutting insert (21) as set forth in claim I, comprising an identifying indicia (63) in the form of a number or a letter corresponding to each cutting edge (39).

8. The cutting insert (21) as set forth in claim I, wherein each recess surface (33) defines a rake surface.

9. The cutting insert (21) as set forth in claim I, wherein a first portion (65) of each recess surface (33) generally adjacent to the main surface (31) extends radially inwardly from the main surface along a plane intersecting a central axis of the cutting insert (21).

10. The cutting insert (21) as set forth in claim 1, wherein the main surface (31) is generally circularly cylindrical.

11. A cutting tool comprising a tool holder (47) and at least one cutting insert (21) as claimed in claim I mounted to the tool holder.

12. A cutting insert (21) as set forth in claim I, wherein a first portion (65) of each recess surface (33) generally adjacent to the main surface (31) extends radially inwardly from the main surface in a first general direction and a second portion (67) of each recess surface (33) disposed radially inward from the first portion (65) deviates from the first general direction inwardly toward a center (C) of a recess (69) defined by each recess surface (33).

13. The cutting insert (21) as set forth in claim 12, wherein a third portion (71) of each recess surface (33) disposed radially inwardly from the second portion (67) extends generally away from the center (C) of the recess (69).

14. The cutting insert (21) as set forth in claim I, comprising a radiused surface between the fourth portion (73) and the third portion (71).

15. A method of machining with an indexable cutting insert (21) according to claim I, comprising:
mounting an indexable cutting insert (21) on a tool holder, the cutting insert (21) comprising a body (23) having a first surface (25), a second surface (27), and an intermediate surface (29), the intermediate surface comprising a generally cylindrical main surface (31), a hole for a clamping screw, and a plurality of recess surfaces (33), each recess surface extending radially inwardly from the main surface, the main surface (31) and each recess surface (33) extending between the first surface (25) and the second surface (27), cutting edges (39) being defined by intersections between the main surface (31) and each recess surface (33), such that one cutting edge formed by the intersection of one of the recess surfaces (33) and the main surface (31) extends beyond a periphery of the tool holder and forms a working cutting edge (39);
performing cutting operations with the working cutting edge (39); and
changing the mounting of the cutting insert (2I) so that another cutting edge (39) formed by the intersection of one of the recess surfaces (33) and the main surface (31) extends beyond the periphery of the tool holder and forms the working cutting edge (39).

## Patentansprüche

1. Wendeschneidplatte (21) mit einem Körper (23), der eine erste Oberfläche (25), eine zweite Oberfläche (27) und eine Zwischenfläche (29) aufweist, wobei die Zwischenfläche eine üblicherweise zylindrische Hauptfläche (31) aufweist und eine Mehrzahl an Einbuchtungsflächen (33), wobei sich jede Einbuchtungsfläche von der Hauptfläche radial nach innen erstreckt, wobei die Hauptfläche (31) und jede Einbuchtungsfläche (33) sich zwischen der ersten Oberfläche (25) und der zweiten Oberfläche (27) erstrecken, wobei die Hauptfläche (31) und jede Einbuchtungsfläche (33) sich wenigstens entlang von zwei Kanten schneiden, wobei durch jede Schnittstelle zwischen der Hauptfläche (31) und jeder Einbuchtungsfläche (33) eine Schneidkante (39) definiert wird, wobei die Hauptfläche (31) eine Freifläche definiert, **dadurch gekennzeichnet, dass** der Schneideinsatz ein Loch (51) für eine Spannschraube aufweist, wobei
ein erster Abschnitt (65) jeder Einbuchtungsfläche (33), der üblicherweise an die Hauptfläche (31) angrenzt, sich von der Hauptfläche radial nach innen entlang einer Ebene erstreckt, die eine zentrale Achse der Schneidplatte (21) schneidet, und ein zweiter Abschnitt (67) jeder Einbuchtungsfläche (33), der sich von dem ersten Abschnitt (65) radial nach innen erstreckt, von der Ebene nach innen abweicht, üblicherweise in Richtung eines Zentrums (C) einer Einbuchtung (69), die durch jede Einbuchtungsfläche (33) definiert wird,
ein dritter Abschnitt (71) jeder Einbuchtungsfläche (33), der sich von dem zweiten Abschnitt (67) radial nach innen erstreckt, sich üblicherweise von dem Zentrum (C) der Einbuchtung (69) weg erstreckt, und wobei
ein vierter Abschnitt (73) jeder Einbuchtungsfläche (33), der sich von dem dritten Abschnitt (71) radial nach innen erstreckt, planar ist.

2. Wendeschneidplatte (21) nach Anspruch 1, wobei sich jede Einbuchtungsfläche (33) von der ersten Oberfläche (25) zu der zweiten Oberfläche (27) erstreckt.

3. Wendeschneidplatte (21) nach Anspruch 1, mit einer Fasenfläche (35) zwischen der Hauptfläche (31) und jeder der ersten Oberfläche (25) und der zweiten Oberfläche (27).

4. Wendeschneidplatte (21) nach Anspruch 3, mit einer weiteren Fasenfläche (37) zwischen der Fasenfläche (35) und der Einbuchtungsfläche (33).

5. Wendeschneidplatte (21) nach Anspruch 1, wobei die erste Oberfläche (25) und die zweite Oberfläche (27) jeweils eine üblicherweise planare Stützfläche (41 und 43) aufweisen.

6. Wendeschneidplatte (21) nach Anspruch 1, mit vier Einbuchtungsflächen (33), die acht Schneidkanten (39) mit der Hauptfläche (31) ausbilden.

7. Wendeschneidplatte (21) nach Anspruch 1, mit einem Identifizierungszeichen (63) in Form einer Zahl oder eines Buchstabens, die/der zu jeder Schneidkante (39) korrespondiert.

8. Wendeschneidplatte (21) nach Anspruch 1, wobei jede Einbuchtungsfläche (33) eine Spanfläche definiert.

9. Wendeschneidplatte (21) nach Anspruch 1, wobei ein erster Abschnitt (65) jeder Einbuchtungsfläche (33), der üblicherweise an die Hauptfläche (31) angrenzt, sich von der Hauptfläche radial nach innen erstreckt, entlang einer Ebene, die eine zentrale Achse der Wendeschneidplatte (21) schneidet.

10. Wendeschneidplatte (21) nach Anspruch 1, wobei die Hauptfläche (31) üblicherweise kreisförmig zylindrisch ist.

11. Schneidwerkzeug mit einer Werkzeughalterung (47) und wenigstens einer Wendeschneidplatte (21) nach Anspruch 1, die in der Werkzeughalterung montiert ist.

12. Wendeschneidplatte (21) nach Anspruch 1, wobei ein erster Abschnitt (65) jeder Einbuchtungsfläche (33), der üblicherweise an die Hauptfläche (31) angrenzt, sich in einer ersten Hauptrichtung radial von der Hauptfläche nach innen erstreckt, und ein zweiter Abschnitt (67) jeder Einbuchtungsfläche (33), der sich von dem ersten Abschnitt (65) radial nach innen erstreckt, von der ersten Hauptrichtung nach innen in Richtung eines Zentrums (C) einer Einbuchtung (69), die von jeder Einbuchtungsfläche (33) definiert wird, abweicht.

13. Wendeschneidplatte (21) nach Anspruch 12, wobei sich ein dritter Abschnitt (71) jeder Einbuchtungsfläche (33), der sich von dem zweiten Abschnitt (67) radial nach innen erstreckt, üblicherweise von dem Zentrum (C) der Einbuchtung (69) weg erstreckt.

14. Wendeschneidplatte (21) nach Anspruch 1, mit einer gerundeten Oberfläche zwischen dem vierten Abschnitt (73) und dem dritten Abschnitt (71).

15. Verfahren zur Bearbeitung mit einer Wendeschneidplatte (21) nach Anspruch 1, umfassend:
Montieren einer Wendeschneidplatte (21) in einer Werkzeughalterung, wobei die Wendeschneidplatte (21) einen Körper (23) aufweist, der eine erste Oberfläche (25), eine zweite Oberfläche (27) und eine Zwischenfläche (29) aufweist, wobei die Zwischenfläche eine üblicherweise zylindrische Hauptfläche (31) aufweist, und der ein Loch für eine Spannschraube aufweist und eine Mehrzahl an Einbuchtungsflächen (33), wobei jede Einbuchtungsfläche sich von der Hauptfläche radial nach innen erstreckt, wobei die Hauptfläche (31) und jede Einbuchtungsfläche (33) sich zwischen der ersten Oberfläche (25) und der zweiten Oberfläche (27) erstreckt, wobei von den Schnittstellen zwischen der Hauptfläche (31) und jeder Einbuchtungsfläche (33) Schneidkanten (39) definiert werden, sodass sich eine Schneidkante, die von der Schnittstelle zwischen einer der Einbuchtungsflächen (33) und der Hauptfläche (31) gebildet wird, über die Peripherie der Werkzeughalterung hinaus erstreckt und eine Arbeitsschneidkante (39) ausbildet,
Ausführen von Schneidvorgängen mit der Arbeitsschneidkante (39) und
Verändern der Montage der Wendeschneidplatte (21), sodass sich eine andere Schneidkante (39), die von der Schnittstelle zwischen einer der Einbuchtungsflächen (33) und der Hauptfläche (31) ausgebildet wird, über die Peripherie der Werkzeughalterung hinaus erstreckt und eine Arbeitsschneidkante (39) ausbildet.

## Revendications

1. Plaquette de coupe amovible (21), comprenant un corps (23) présentant une première surface (25), une deuxième surface (27), et une surface intermédiaire (29), la surface intermédiaire comprenant une surface principale globalement cylindrique (31) et une pluralité de surfaces d'évidement (33), chaque surface d'évidement s'étendant radialement vers l'intérieur depuis la surface principale, la surface principale (31) et chaque surface d'évidement (33) s'étendant entre la première surface (25) et la deuxième surface (27), la surface principale (31) et chaque surface d'évidement (33) se croisant le long d'au moins deux bords, une arête de coupe (39) étant définie par chaque intersection entre la surface principale (31) et chaque surface d'évidement (33), où la surface principale (31) définit une surface en relief, **caractérisée en ce que** la plaquette de coupe comprend un trou (51) destiné à une vis de fixation, où
une première partie (65) de chaque surface d'évidement (33) globalement adjacente à la surface principale (31) s'étend radialement vers l'intérieur depuis la surface principale le long d'un plan coupant l'axe central de la plaquette de coupe (21), et une deuxième partie (67) de chaque surface d'évidement (33) disposée radialement vers l'intérieur depuis la première partie (65) s'écarte du plan vers l'intérieur globalement en direction d'un centre (C) d'un évidement (69) défini par chaque surface d'évidement (33),
une troisième partie (71) de chaque surface d'évidement (33) disposée radialement vers l'intérieur depuis la deuxième partie (67) s'étend globalement en s'écartant du centre (C) de l'évidement (69), et où une quatrième partie (73) de chaque surface d'évidement (33) disposée radialement vers l'intérieur depuis la troisième partie (71) est plane.

2. Plaquette de coupe (21) selon la revendication 1, dans laquelle chaque surface d'évidement (33) s'étend depuis la première surface (25) jusqu'à la deuxième surface (27).

3. Plaquette de coupe (21) selon la revendication 1, comprenant une surface de chanfrein (35) entre la surface principale (31) et chacune de la première surface (25) et de la deuxième surface (27).

4. Plaquette de coupe (21) selon la revendication 3, comprenant un autre chanfrein (37) entre la surface de chanfrein (35) et la surface d'évidement (33).

5. Plaquette de coupe (21) selon la revendication 1, dans laquelle la première surface (25) et la deuxième surface (27) comprennent chacune une surface de support globalement plane (41 et 43).

6. Plaquette de coupe (21) selon la revendication 1, comprenant quatre surfaces d'évidement (33) formant huit arêtes de coupe (39) avec la surface principale (31).

7. Plaquette de coupe (21) selon la revendication 1, comprenant un repère d'identification (63) sous la forme d'un chiffre ou d'une lettre correspondant à chaque arête de coupe (39).

8. Plaquette de coupe (21) selon la revendication 1, dans laquelle chaque surface d'évidement (33) définit une surface de dépouille.

9. Plaquette de coupe (21) selon la revendication 1, dans laquelle une première partie (65) de chaque surface d'évidement (33) globalement adjacente à la surface principale (31) s'étend radialement vers l'intérieur depuis la surface principale le long d'un plan coupant un axe central de la plaquette de coupe (21).

10. Plaquette de coupe (21) selon la revendication 1, dans laquelle la surface principale (31) est globalement circulairement cylindrique.

11. Outil de coupe comprenant un support d'outil (47) et au moins une plaquette de coupe (21) selon la revendication 1 montée sur le support d'outil.

12. Plaquette de coupe (21) selon la revendication 1, dans laquelle une première partie (65) de chaque surface d'évidement (33) globalement adjacente à la surface principale (31) s'étend radialement vers l'intérieur depuis la surface principale selon une première direction générale et une deuxième partie (67) de chaque surface d'évidement (33) disposée radialement vers l'intérieur depuis la première partie (65) s'écarte de la première direction générale vers l'intérieur en direction d'un centre (C) d'un évidement (69) défini par chaque surface d'évidement (33).

13. Plaquette de coupe (21) selon la revendication 12, dans laquelle une troisième partie (71) de chaque surface d'évidement (33) disposée radialement vers l'intérieur depuis la deuxième partie (67) s'étend globalement en s'écartant du centre (C) de l'évidement (69).

14. Plaquette de coupe (21) selon la revendication 1, comprenant une surface arrondie entre la quatrième partie (73) et la troisième partie (71).

15. Procédé d'usinage à l'aide d'une plaquette de coupe amovible (21) selon la revendication 1, comprenant les étapes consistant à :
monter une plaquette de coupe amovible (21) sur un support d'outil, la plaquette de coupe (21) comprenant un corps (23) présentant une première surface (25), une deuxième surface (27), et une surface intermédiaire (29), la surface intermédiaire comprenant une surface principale globalement cylindrique (31), un trou destiné à une vis de fixation, et une pluralité de surfaces d'évidement (33), chaque surface d'évidement s'étendant radialement vers l'intérieur depuis la surface principale, la surface principale (31) et chaque surface d'évidement (33) s'étendant entre la première surface (25) et la deuxième surface (27), des arêtes de coupe (39) étant définies par des intersections entre la surface principale (31) et chaque surface d'évidement (33), de telle sorte qu'une première arête de coupe formée par l'intersection de l'une des surfaces d'évidement (33) et de la surface principale (31) s'étend au-delà d'une périphérie du support d'outil et forme une arête de coupe de travail (39) ;
réaliser des opérations de coupe avec l'arête de coupe de travail (39) ; et
modifier le montage de la plaquette de coupe (21) de sorte qu'une autre arête de coupe (39) formée par l'intersection de l'une des surfaces d'évidement (33) et de la surface principale (31) s'étend au-delà de la périphérie du support d'outil et forme l'arête de coupe de travail (39).
